(19) Europäisches Patentamt
European Patent Office
Office européen des brevets

(11) **EP 2 069 171 B1**

(12) **EUROPÄISCHE PATENTSCHRIFT**

(45) Veröffentlichungstag und Bekanntmachung des Hinweises auf die Patenterteilung:
**07.12.2011 Patentblatt 2011/49**

(21) Anmeldenummer: **07729549.1**

(22) Anmeldetag: **25.05.2007**

(51) Int Cl.:
*B60T 8/172* *(2006.01)*     *G01M 1/12* *(2006.01)*

(86) Internationale Anmeldenummer:
**PCT/EP2007/055125**

(87) Internationale Veröffentlichungsnummer:
**WO 2008/037507 (03.04.2008 Gazette 2008/14)**

(54) **VERFAHREN UND VORRICHTUNG ZUR SCHWERPUNKTHÖHENSCHÄTZUNG EINES FAHRZEUGS**

METHOD AND DEVICE FOR ESTIMATING THE HEIGHT OF THE CENTER OF GRAVITY OF A VEHICLE

PROCEDE ET DISPOITIF D'ESTIMATION DE LA HAUTEUR DU CENTRE DE GRAVITE D'UN VEHICULE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.09.2006 DE 102006045304**

(43) Veröffentlichungstag der Anmeldung:
**17.06.2009 Patentblatt 2009/25**

(73) Patentinhaber: **Continental Automotive GmbH 30165 Hannover (DE)**

(72) Erfinder:
- **FIEDLER, Jens 93107 Thalmassing (DE)**
- **MARSTALLER, Rainer 85055 Ingolstadt (DE)**
- **MAYER, Andreas 93049 Regensburg (DE)**

(56) Entgegenhaltungen:
DE-A1- 4 217 710    DE-A1- 10 135 020
DE-A1- 10 247 993    DE-A1- 19 904 216

**Beschreibung**

Die Erfindung betrifft ein Verfahren und eine Vorrichtung zur Schwerpunkthöhenschätzung eines Fahrzeugs basierend auf während der Fahrt erfassten Betriebsgrößen.

In Überschlagserkennungssystemen von Kraftfahrzeugen gehen während der Fahrt erfasste Betriebsgrößen ein. Anhand der Betriebsgrößen kann erkannt werden, ob es zu einem Überschlag des Fahrzeugs kommt. Für diesen Fall sind geeignete Sicherheitsmaßnahmen vorgesehen.

In die Überschlagserkennung gehen auch Fahrzeugparameter wie die Masse des Fahrzeugs oder dessen Schwerpunkthöhe ein. Diese Parameter werden üblicherweise über die Lebenszeit des Fahrzeugs als konstant angenommen. Für Sportfahrzeuge, bei denen nur eine geringe Variation dieser Parameter auftritt, ist dieses Vorgehen gerechtfertigt. Anders stellt sich die Situation beispielsweise für Geländelimousinen dar. Geländelimousinen werden auch als Sport Utility Vehicles oder kurz SUV bezeichnet. Variationen der Fahrzeugmasse um bis zu 25% sowie Variationen der Schwerpunkthöhe um ungefähr 10% sind bei Geländelimousinen nicht unüblich.

Die Schwerpunkthöhenschätzung zum Zwecke der Überschlagserkennung ist bereits aus der DE 19918597 A1 bekannt. Dort ist ein Verfahren zur Reduktion der Kippgefahr von Fahrzeugen beschrieben. Bei diesem Verfahren wird ständig ein Kippkoeffizient des Fahrzeugs ermittelt und dieser mit einem vorgegebenen Grenzwert verglichen. Bei Überschreiten des Grenzwertes wird automatisch ein Lenkeingriff eingeleitet, der von der ermittelten Kippstabilität abhängig ist. Zu Beginn jeder Fahrt wird die Schwerpunkthöhe des Fahrzeugs geschätzt und der Wert abgespeichert.

Die DE 3222149 C2 beschreibt eine Vorrichtung zur Vermeidung von Seitwärtskippen eines Fahrzeugs. Beim Fahrzeug handelt es sich um einen Portalhubwagen für den Transport großräumiger Container. Die Vorrichtung berechnet die Höhe des Fahrzeuggesamtschwerpunkts. Bei der Berechnung der Höhe des Gesamtschwerpunkts wird das Gewicht des Portalhubwagens als bekannt vorausgesetzt. Die Höhe des Containers sowie das Gewicht des Containers werden jeweils über eine Messeinrichtung erfasst. Ausgehend vom Gewicht des Portalhupwagens, der Höhe des Schwerpunkts des Portalhupwagens, dem Gewicht des Containers sowie der Höhe des Schwerpunktes des Containers wird die Gesamtschwerpunktshöhe ermittelt.

In der DE 4416991 A1 ist ein Verfahren und eine Vorrichtung zum Warnen bei Kippgefahr bei Kurvenfahrten von Lastwagen beschrieben. Hierzu wird vorm Einfahren des Fahrzeuges in eine Kurve der Fahrzeugtyp und die für die Kippgefahr beim Durchfahren dieser Kurve relevanten Zustandsdaten, wie Fahrzeuggewicht und Fahrzeuggeschwindigkeit erfasst. In Abhängigkeit vom Schwerpunkt der Fahrzeugmasse und vom Kurvenradius wird das Kipprisiko beim Durchfahren der Kurve mit der erfassten Fahrzeuggeschwindigkeit ermittelt und zumindest ein Signal bei überhöhter Fahrgeschwindigkeit und festgestellter Kippgefahr ausgelöst. In einem möglichst geraden Streckenabschnitt vor einer Kurve sind in einer Linie quer zur Fahrtrichtung liegende Radlastsensoren vorgesehen. Durch Summenbildung der in den einzelnen Radlastsensoren ermittelten Radlasten wird das Gesamtgewicht erfasst. Ferner ist vor der Kurve ein Sensor vorgesehen, mit dem die Höhe und die Höhenkonturen des jeweiligen Fahrzeugs erfassbar sind. Somit ist in Abhängigkeit vom Gesamtgewicht des Fahrzeugs, dessen Höhe und dessen Höhenkontur sowie anhand vorgegebener Daten für den festgestellten Fahrzeugtyp eine gewichtsabhängige Abschätzung der Höhenlage des Fahrzeugschwerpunktes durchführbar.

Aus der DE 102 47 993 A1 geht ein Verfahren sowie die zugehörige Vorrichtung zur Ermittlung der Schwerpunktshöhe eines Kraftfahrzeugs hervor, bei dem eine die Wankbewegung des Fahrzeugs um seine in Fahrzeuglängsrichtung orientierte Wankachse repräsentierende Größe ermittelt wird, eine die Querbeschleunigung des Fahrzeugs repräsentierende Größe ermittelt wird, und aus der die Wankbewegung repräsentierenden Größe und der die Querbeschleunigung repräsentierenden Größe die Schwerpunktshöhe ermittelt wird. Dabei ist vorgesehen, dass die Ermittlung der Schwerpunktshöhe nur in vordefinierten Fahrzuständen erfolgt, wobei in die Ermittlung der vordefinierten Fahrzustände die Änderung der Wankrate pro Zeiteinheit eingeht.

Aus der DE 101 35 020 A1 geht eine Vorrichtung beziehungsweise ein Verfahren zur Erkennung und Behebung einer Umkippgefahr eines mit einem Regelungssystem ausgestatteten Fahrzeugs um eine in Längsrichtung des Fahrzeugs orientierte Fahrzeugachse hervor. Dieses Regelungssystem steuert mit seinen Ausgangssignalen, entsprechend den Ausgangssignalwerten, Aktoren an. Zur Erkennung der Kippgefahr wird eine die Querdynamik des Fahrzeugs beschreibende Größe ermittelt. Diese die Querdynamik des Fahrzeugs beschreibende Größe wird mit wenigstens einem charakteristischen Wert, insbesondere einem Schwellenwert verglichen. Für den Fall, dass die die Querdynamik des Fahrzeugs beschreibende Größe größer oder gleich dem charakteristischem Wert ist, wird die Menge aller möglichen vom Regelungssystem zur Stabilitätsregelung an die Aktoren abgebbaren Kombinationen von Ausgangssignalwerten eingeschränkt.

Die DE 42 17 710 A1 offenbart ein Verfahren zur Erkennung einer winterglatten Fahrbahn. Im Rahmen des vorbekannten Verfahrens ist eine Detektion einer quasistationären Kreisfahrt über die erfasste Längsbeschleunigung bekannt.

Es stellt sich die Aufgabe, eine verbesserte Schwerpunkthöhenschätzung sowohl für ein Verfahren als auch für eine Vorrichtung vorzusehen.

Die Aufgabe wird durch ein Verfahren und eine Vorrichtung mit den Merkmalen der nebengeordneten Patentansprüche gelöst. Vorteilhafte Weiterbildungen ergeben sich aus den Unteransprüchen.

Zur Lösung der Aufgabe sind ein Verfahren und eine korrespondierende Vorrichtung zur Schwerpunkthöhenschätzung eines Fahrzeugs vorgesehen. Es wird die Querbeschleunigung des Fahrzeugs ermittelt. Eine vorgegebene erste Fahrsituation wird in Abhängigkeit einer ermittelten Rollrate oder eines ermittelten Rollwinkels des Fahrzeugs detektiert. Ferner wird eine vorgegebene zweite Fahrsituation zu einem zweiten Zeitpunkt in Abhängigkeit der ermittelten Rollrate oder des ermittelten Rollwinkels des Fahrzeugs detektierte wobei bei der Detektion der ersten Fahrsituation und der zweiten Fahrsituation jeweils erfasst wird, ob der Rollwinkel ein lokales Extremum erreicht. In einem Zeitraum, der vom ersten und zweiten Zeitpunkt begrenzt wird, wird ein Differenzwinkel ermittelt, den ein Fahrzeugaufbau des Fahrzeugs im Zeitraum verkippt. Des Weiteren werden eine Winkelgeschwindigkeit der Verkippung und eine Winkelbeschleunigung der Verkippung im Zeitraum ermittelt. In Abhängigkeit der Querbeschleunigung, des Differenzwinkels, der Winkelgeschwindigkeit und der Winkelbeschleunigung wird eine Schwerpunkthöhe des Fahrzeugs geschätzt.

Vorteil dieser Anordnung ist, dass der Differenzwinkel, die Winkelgeschwindigkeit und die Winkelbeschleunigung in einem engen Zusammenhang stehen, sodass es ausreichend ist, einen dieser drei Parameter sensorisch zu erfassen, um die anderen daraus zu ermitteln. Somit ist der Aufwand für Sensoren zur Schwerpunkthöhenschätzung sehr gering, da darüber hinaus nur noch die Querbeschleunigung des Fahrzeugs zu erfassen ist.

In einer vorteilhaften Ausgestaltung wird bei der Detektion der ersten Fahrsituation erfasst, ob die Rollrate eine vorgegebene erste Schwelle überschreitet oder unterschreitet, und es wird bei der Detektion der zweiten Fahrsituation erfasst, ob die Rollrate eine vorgegebene zweite Schwelle unterschreitet beziehungsweise überschreitet. Mit diesen Grenzwertbetrachtungen geht eine einfache Ausgestaltung des Sensors oder der Sensoren für die Detektion der Fahrsituationen einher.

Vorteilhafterweise wird bei der Detektion der ersten und der zweiten Fahrsituation erfasst, ob die Rollrate verschwindet oder nahezu verschwindet. Auf diese Weise wird das Einfahren des Fahrzeuges von einer geraden Strecke in eine Kurve bis zum Kurvenscheitelpunkt detektiert oder umgekehrt die Kurvenausfahrt ab dem Scheitelpunkt detektiert.

Vorteilhafterweise wird die Rollrate mittels eines geeigneten Sensors, der auch als Rollratensensor bezeichnet wird, detektiert. Der Differenzwinkel wird in diesem Fall durch eine Integration der Rollrate über den Zeitraum erfasst.

Bei der vorteilhaften Verwendung desselben Sensors wird die Winkelbeschleunigung durch eine Ableitung der Rollrate im Zeitraum erfasst.

Um eine Bewegungsgleichung anwenden zu können, wird in einer vorteilhaften Ausgestaltung in Abhängigkeit von einer erfassten Betriebsgröße erfasst, ob das Fahrzeug auf einer quergeneigten Fahrbahn fährt. Die Bewegungsgleichung wird unten detailliert beschrieben. Die Schwerpunkthöhenschätzung erfolgt nur, wenn die Neigung der Fahrbahn einen vergebenen Winkel nicht überschreitet, um durch die Neigung herrührende Schätzfehler auszuschalten.

Vorteilhafterweise wird in Abhängigkeit einer erfassten Betriebgröße detektiert, ob das Fahrzeug eine quasistationäre Kreisfahrt durchführt. Eine Schwerpunkthöhenschätzung erfolgt nur, wenn keine quasistationäre Kreisfahrt erfolgt, da die quasistationäre Kreisfahrt den Zeitraum, innerhalb dem die Betriebsgrößen für die Bewegungsgleichung ermittelt werden, signifikant verlängert.

Vorteilhafterweise wird zur Detektion der quasistationären Kreisfahrt verglichen, ob die Differenz eines ersten erfassten Beschleunigungssignals, das zumindest eine Beschleunigungskomponente senkrecht zur Fahrzeughochachse anzeigt, und eines zweiten Beschleunigungssignals, das das gefilterte erste Beschleunigungssignal umfasst, kleiner ist als ein vorgegebener Grenzwert. Die Filterung ist üblicherweise eine Verzögerung, so dass anhand des Vergleichs ersichtlich ist, ob die Beschleunigung nahezu konstant ist, was auf die quasistationäre Kreisfahrt schließen lässt.

Vorteilhafterweise erfolgt die Filterung mittels eines Chebyshev-Filter, was eine genaue Justierung der zu messenden Verzögerung ermöglicht.

Die regelmäßige Kontrolle hinsichtlich der quasistationären Kreisfahrt erfolgt vorteilhafterweise dadurch, dass der Vergleich mehrfach, jeweils zeitversetzt durchgeführt wird und ein Zähler in Abhängigkeit des durchgeführten Vergleichs gesetzt wird.

In einer vorteilhaften Ausgestaltung ist eine einfache Detektion durch einen Vergleich des Zählers mit einem vorgegebenen Grenzwert vorgesehen, anhand dessen die quasistationäre Kreisfahrt angezeigt wird.

In einer vorteilhaften Ausgestaltung ist die Beschleunigungskomponente die erfasste Querbeschleunigung, sodass auf den bereits vorgesehenen Beschleunigungssensor zurückgegriffen werden kann.

In einer vorteilhaften Weiterbildung wird darüber hinausgehend noch die Längsbeschleunigung des Fahrzeugs als Beschleunigungskomponente für die Detektion der quasistationären Kreisfahrt herangezogen, um die Genauigkeit zu erhöhen.

Die Genauigkeit der Schwerpunkthöhenschätzung wird in einer vorteilhaften Ausgestaltung ferner erhöht, wenn die Masse des Fahrzeugs, die in die Bewegungsgleichung eingeht, in Abhängigkeit von einer erfassten Betriebsgröße geschätzt wird.

Eine vorteilhafte Ausgestaltung zur Absicherung der Rollrateninformation sieht vor, Abstandsveränderungen des Fahrzeugsaufbaus relativ zur Radaufhängung des Fahrgestells zu ermitteln oder anhand der Abstandsveränderungen die Rollrate zu ermitteln.

Nachfolgend wird die Erfindung unter Bezugnahme auf die schematischen Zeichnungen anhand von Ausführungsbeispielen erklärt.

Es zeigen:

Figur 1     eine Aufsicht auf ein Fahrzeug bei der Einfahrt in eine Kurve,

Figur 2     ein Querschnitt durch das Fahrzeug bei der Kurvenfahrt,

Figur 3     eine Vorrichtung zur Schwerpunkthöhenschätzung und

Figur 4     ein Schaubild, das die Detektion einer quasistationären Kreisfahrt veranschaulicht.

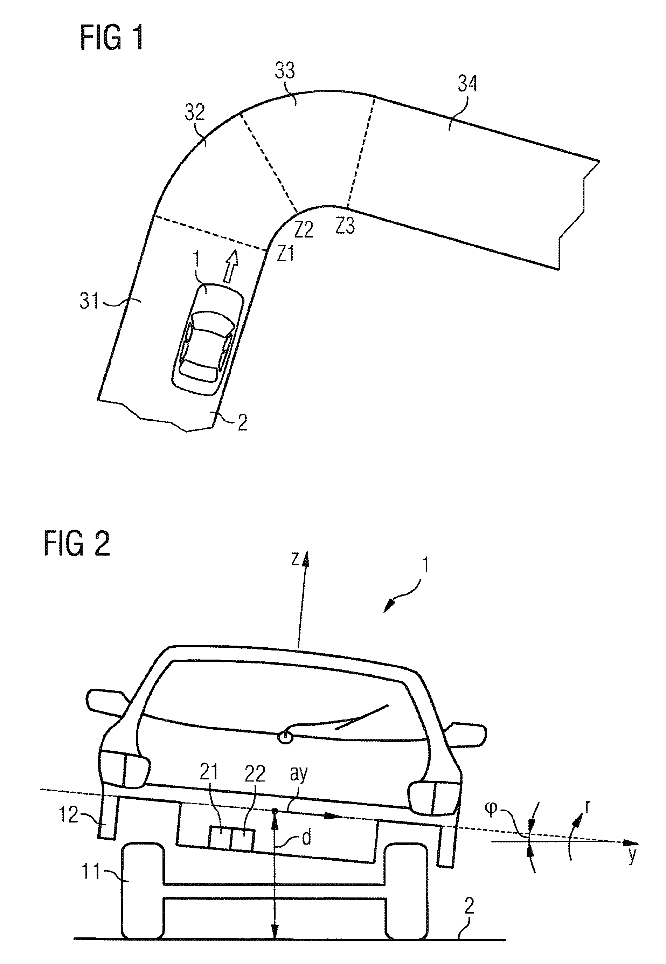

Figur 1 zeigt eine Aufsicht auf ein Fahrzeug 1, das auf einer Fahrbahn 2 fährt. Die Fahrbahn 2 hat eine Kurve und lässt sich in vier Bereiche unterteilen. Ein erster Bereich 31 umfasst einen geraden Fahrbahnabschnitt. Ein zweiter Bereich 32 umfasst den Bereich von einer Kurveneinfahrt Z1 bis zu einem Scheitelpunkt Z2 der Kurve. Vom Scheitelpunkt Z2 bis zu einer Kurvenausfahrt Z3 erstreckt sich der dritte Bereich 33, an den sich ein weiterer gerader Fahrbahnabschnitt 34 anschließt. Die Kurve ist derart gekrümmt, dass der Kurvenradius bis zum Scheitelpunkt Z2 abnimmt und danach wieder zunimmt.

Bei der Einfahrt des Fahrzeugs 1 in die Kurve tritt mit der Kurveneinfahrt Z1 eine auf Grund der Kurvenfahrt auf das Fahrzeug 1 wirkende Querbeschleunigung auf. Mit dem abnehmenden Kurvenradius nimmt auch die Querbeschleunigung bis Erreichen des Scheitelpunktes Z2 zu. Bei der Kurvenausfahrt vergrößern sich der Kurvenradius und die auf das Fahrzeug 1 wirkende Querbeschleunigung. Bei der Geradeausfahrt tritt keine Querbeschleunigung auf.

Figur 2 zeigt das Fahrzeug 1 bei der Kurvenfahrt auf ebener Fahrbahn 2. Das Fahrzeug 1 hat einen Fahrzeugaufbau 12 und ein Fahrgestell 11. Auf den Fahrzeugaufbau 2 ist eine Fahrzeugquerachse y und eine Fahrzeughochachse z bezogen. Im Fahrzeug 1 sind ein Querbeschleunigungssensor 21 sowie ein Rollratensensor 22 vorgesehen. Der Querbeschleunigungssensor 21 erfasst wegen seiner Montage im Fahrzeugaufbau 12 die Querbeschleunigung ay in Richtung der Fahrzeugquerachse y.

Die von der Kurvenfahrt herrührende Querbeschleunigung geht mit einer Querkraft einher, die eine Verkippung um einen Verkippungswinkel φ des Fahrzeugsaufbaus 12 bezogen auf das Fahrgestell 11 bewirkt. Der Verkippungswinkel φ wird auch als Rollwinkel bezeichnet. Bei der Fahrt auf ebener Fahrbahn 2, gibt dieser Verkippungswinkel φ auch die Verkippung des Fahrzeugaufbaus 12 bezogen auf die Fahrbahn 2 an.

Bei der auftretenden Verkippung hat die vom Querbeschleunigungssensor 21 erfasste Querbeschleunigung ay auch eine geringe Komponente in Gravitationsrichtung sowie eine Hauptkomponente senkrecht dazu.

Der Rollratensensor 22 erfasst eine Rollrate r, die eine Rollwinkelgeschwindigkeit der Verkippung umfasst.

Basierend auf der ermittelten Querbeschleunigung ay, oder deren Hauptkomponente, und der Rollrate r wird eine Schwerpunkthöhe d des Fahrzeugs 1 ermittelt.

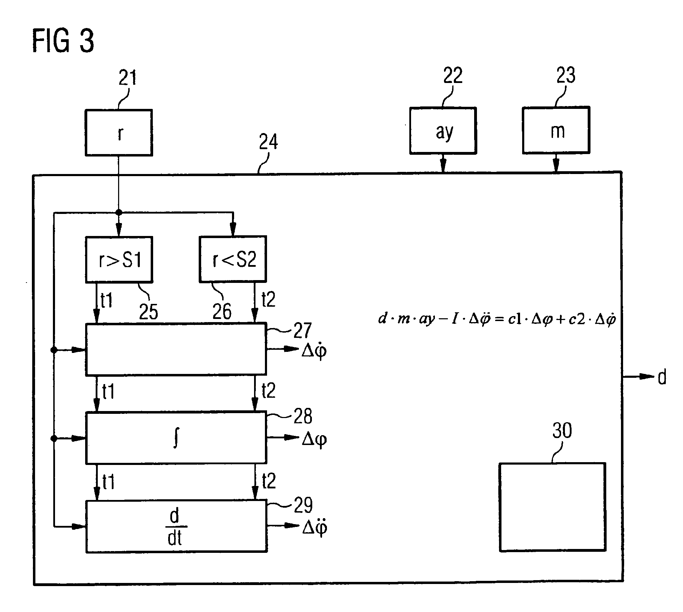

Figur 3 zeigt schematisch eine Vorrichtung 24 zur Schwerpunkthöhenschätzung.

Die Vorrichtung 24 zur Schwerpunkthöhenschätzung ist an den Rollratensensors 21, den Querbeschleunigungssensor 22 sowie ein Mittel 23 zur Bereitstellung der Fahrzeugmasse m gekoppelt. Die Masse m des Fahrzeugs 1 kann als fix angenommen werden. Es ist aber auch denkbar, dass das Mittel 23 als ein Masseschätzer ausgebildet ist, der in Abhängigkeit eines erfassten Betriebsparameters des Fahrzeugs 1 dessen Masse m schätzt.

Die Schwerpunkthöhenschätzung erfolgt mittels einer Bewegungsgleichung, die einen aktuellen Verkippungswinkel Δφ um eine Fahrzeugrollachse sowie eine aktuelle Winkelgeschwindigkeit Δφ̇ und eine aktuelle Winkelbeschleunigung Δφ̈ jeweils der Verkippung berücksichtigt.

Allgemein lässt sich diese Gleichung schreiben als

$$d \cdot m \cdot ay - I \cdot \Delta\ddot{\varphi} = c1 \cdot \Delta\varphi + c2 \cdot \Delta\dot{\varphi}.$$

Dabei ist d der Abstand des Schwerpunkts von der Rollachse. I ist das Massenträgheitsmoment bezüglich der Rollachse. c1 und c2 sind fahrzeugspezifische Konstanten. Mittels bekannter Fahrzeuggeometrie lassen sich die Konstanten c1, c2 sowie das Massenträgheitsmoment I ermitteln. Es sei bemerkt, dass das Massenträgheitsmoment I basierend auf der Masseschätzung angepasst werden kann. m ist die Masse des Fahrzeugaufbaus.

Der aktuelle Verkippungswinkels Δφ ist ein Differenzwinkel zwischen einem, zu einem ersten Zeitpunkt t1 ermittelten Verkippungswinkel und einem, zu einem zweiten Zeitpunkt t2 ermittelten Verkippungswinkel. Entsprechendes gilt für die aktuelle Winkelgeschwindigkeit Δφ̇ sowie die aktuelle Winkelbeschleunigung Δφ̈.

Die aktuelle Winkelgeschwindigkeit Δφ̇ wird durch den Rollratensensor ermittelt. Der aktuelle Verkippungswinkel Δφ wird durch Integration der Rollrate r bestimmt. Die Integration startet zum ersten Zeitpunkt t1 und endet zum zweiten Zeitpunkt t2. Die aktuelle Winkelbeschleunigung Δφ̈ wird durch entsprechende Ableitung der ermittelten Rollrate r bestimmt.

Der erste Zeitpunkt t1 wird mittels Detektion einer vorgegebenen ersten Fahrsituation bestimmt. Solch eine vorgegebene Fahrsituation ist beispielsweise das Einfahren Z1 in die Kurve. Diese erste Fahrsituation kann detektiert werden, indem ein beginnendes Rollen oder eine beginnende Verkippung anhand der Rollrate r oder des Verkippungswinkels φ detektiert wird.

Der zweite Zeitpunkt t2 wird anhand einer zweiten vorgegebenen Fahrsituation detektiert. Diese umfasst beispielsweise das Durchfahren des Scheitelpunkts (Z2) der Kurve. Dieses kann anhand einer verschwindenden Rollrate r bei maximalem Verkippungswinkel φ oder anhand des lokalen Maximums des Verkippungswinkels φ detektiert werden.

Der im Zeitraum zwischen dem ersten und dem zweiten Zeitpunkt t1, t2 ermittelten aktuellen Verkippungswinkel sowie die aktuelle Winkelgeschwindigkeit und die aktuelle Winkelbeschleunigung $\Delta\varphi, \Delta\dot{\varphi}, \Delta\ddot{\varphi}$ werden in die Bewegungsgleichung eingesetzt.

Dieses ist schematisch auch in Figur 3 dargestellt. Zur Detektion der ersten vorgegebenen Fahrsituation und der zweiten vorgegebenen Fahrsituation sind ein erster Detektor 25 beziehungsweise ein zweiter Detektor 26 vorgesehen. Im ersten Detektor wird detektiert, ob die Rollrate r eine vorgegebene erste Schwelle S1 überschreitet, und im zweiten Detektor 26 wird detektiert, ob die Rollrate R eine vorgegebene zweite Schwelle S2 unterschreitet.

Wenn die Kurveneinfahrt bis zum Scheitelpunkt detektiert wird, steigt die Rollrate r zwischen der Kurveneinfahrt Z1 und dem Scheitelpunkt Z2 betragsmäßig zunächst an und fällt dann wieder ab. Gleiches gilt für die Kurvenausfahrt ab dem Scheitelpunkt Z2. Somit kann die erste und die zweite Schwelle S1, S2 betragsmäßig knapp oberhalb der verschwindenden Rollrate r gesetzt werden.

Die detektierten Zeitpunkte t1 und t2 geben den Zeitraum vor, innerhalb dessen der aktuelle Verkippungswinkel, die aktuelle Winkelgeschwindigkeit und die aktuelle Winkelbeschleunigung $\Delta\varphi, \Delta\dot{\varphi}, \Delta\ddot{\varphi}$ ermittelt werden. Zu diesem Zweck wird zum ersten Zeitpunkt t1 und zum zweiten Zeitpunkt t2 die Rollrate r bestimmt und mit einer als Subtrahierer wirkenden Rollrateneinheit 27 die aktuelle Winkelgeschwindigkeit $\Delta\dot{\varphi}$ bestimmt. Zur Bestimmung des aktuellen Verkippungswinkels $\Delta\varphi$ und der aktuellen Winkelbeschleunigung $\Delta\ddot{\varphi}$ ist als Integrator eine Rollwinkeleinheit 28 beziehungsweise als Differenzierer eine Rollbeschleunigungseinheit 29 vorgesehen.

Alternativ ist der aktuelle Verkippungswinkel $\Delta\varphi$ auch durch die Auswertung von Federwegsensorsignalen in einem Näherungsverfahren möglich. Dabei wird ausgenutzt, dass sich der Abstand zwischen dem Fahrzeugaufbau 12 und dem Fahrgestell 11 bei der Kurvenfahrt verändert.

Eine gegebenenfalls nichtzentrische Masseverteilung des Fahrzeugs 1 kann dadurch erkannt werden, dass während Fahrzeugstillständen oder Geradeausfahrten für jeden Federwegsensor ein mittlerer Federwegsensorwert ermittelt wird. Unter der Voraussetzung, dass alle Fahrzeugfedern im linearen Federkennlinienbereich belastet werden, kann damit eine Offsetkompensation der Federwegsensorsignale durchgeführt werden.

Die ermittelten Werte $\Delta\varphi, \Delta\dot{\varphi}, \Delta\ddot{\varphi}$ werden in die Bewegungsgleichung eingesetzt und zur Ermittlung der Schwerpunkthöhe d wird die Bewegungsgleichung nach der Schwerpunktshöhe d aufgelöst.

Es ist jedoch nicht erforderlich, dass die zu detektierenden Fahrsituationen sich auf Kurveneinfahrten und Kurvenausfahrten beschränken. Es ist lediglich erforderlich, dass nur Situationen mit einem von Null abweichenden Rollratensignal zugelassen werden. Überschreitet der Betrag des Rollratensignals einen vordefinierten Betrag, wird die Integration des Rollratensignals gestartet. Dabei werden nur Fahrzustände berücksichtigt, in denen die Rate des Rollratensignals einen vordefinierten Schwellenwert nicht übersteigt. Sobald das Rollratensignal eine voreingestellte Schwelle erreicht, wird die Integration des Rollratensignals gestoppt. Der daraus resultierende aktuelle Verkippungswinkel sowie die aktuelle Winkelgeschwindigkeit und die aktuelle Winkelbeschleunigung $\Delta\varphi, \Delta\dot{\varphi}, \Delta\ddot{\varphi}$ werden in die Bewegungsgleichung eingesetzt. Vorteil dieses Verfahrens ist, dass durch diese Erweiterung der Situationserkennung eine schnellere Schwerpunkthöhenermittlung erfolgt.

Durch geeignete Mittelwertbildung können auch variierende Beladungszustände zuverlässig erkannt werden.

Es sei bemerkt, dass zur Schwerpunkthöhenbestimmung nur Situationen herangezogen werden, in denen das Fahrzeug 1 auf ebener Fahrbahn 2 fährt, also keine Fahrbahnquer- oder Fahrbahnlängsneigung erkannt wird, da ansonsten obige Bewegungsgleichung zu Fehlern bei der Schwerpunkthöhenbestimmung führt.

Solch eine Situation, in der eine Fahrbahnquer- oder Fahrbahnlängsneigung auftritt, kann beispielsweise mit einem Situationsdetektor 30 erkannt werden, der die Ausgabe der als falsch anzunehmenden Schwerpunkthöhe d in solch einem Fall verhindert.

Ferner wird die Schwerpunkthöhenschätzung auch nicht während quasistationärer Kreisfahrten durchgeführt. Auch diese können mit einem Situationsdetektor 30 erkannt werden.

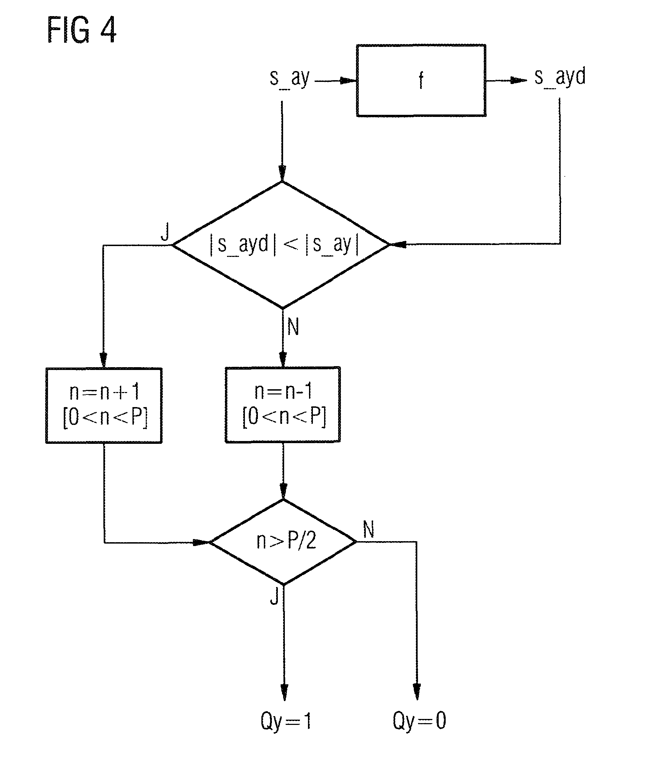

Figur 4 zeigt anhand eines Diagramms das Vorgehen, um die quasistationäre Kreisfahrt zu detektieren. Diese Fahrsituation wird im einfachsten Fall erkannt, indem ein ungefiltertes Querbeschleunigungssignal s_ay und ein gefiltertes, zeitlich verzögertes Querbeschleunigungssignal s_ayd miteinander verglichen werden. Weicht das ungefilterte Querbeschleunigungssignal s_ay vom gefilterten Querbeschleunigungssignal s_ayd ab, so wird ein Situationszähler n entsprechend gesetzt.

Die Filterung des Querbeschleunigungssignals s_ay kann mit einer Chebyshev-Filterfunktion f erfolgen. Das resultierende, gefilterte Querbeschleunigungssignal s_ayd wird mit dem ungefilterten Querbeschleunigungssignal s_ay verglichen. Wenn die Differenz des gefilterten und des ungefilterten Querbeschleunigungssignals s_ayd, s_ay betragsmäßig kleiner als ein Grenzwert G ist, wird ein Zähler n um 1 erhöht. Ansonsten wird dieser Zähler n um 1 verringert. Um den Wertebereich des Zählers zu begrenzen, wird n allerdings nur im Bereich zwischen 0 und einem Grenzwert P verändert. Weitere Inkrementierungen oder Dekrementierungen werden außerhalb dieses Bereichs nicht berücksichtigt.

Durch einen einfachen Grenzwertvergleich, nämlich ob n größer als P/2 ist, wird auf eine quasistationäre Kreisfahrt geschlossen. Wenn obiger Fall erfüllt ist, wird ein Flag Qy=1 gesetzt und ansonsten Qy=0 gesetzt. Natürlich kann das Flag auch in umgekehrter Weise gesetzt werden.

Es kann darüber hinaus geprüft werden, ob ein Längsbeschleunigungssignal obige Bedingungen entsprechend erfüllt. Auch in diesem Fall wird die Differenz des ungefilterten und des gefilterten Längsbeschleunigungssignals dahingehend verglichen, ob sie betragsmäßig kleiner als ein Grenzwert ist, und ein zweiter Zähler m wird, wenn dies der Fall ist, inkrementiert und sonst dekrementiert. Auch in diesem Fall ist der Wertebereich des zweiten Zählers m beschränkt. Gemäß den oben genannten Vorschriften wird ein zweites Flag gesetzt.

Hiermit kann die Genauigkeit der quasistationären Kurvenfahrtdetektion erhöht werden, da nicht nur die Querbeschleunigung sondern auch die Längsbeschleunigung, die zu einer Nickbewegung des Fahrzeugs führt, in die Detektion eingeht. Die quasistationäre Kurvenfahrt wird detektiert; wenn beide Flags gesetzt sind.

Die geschätzte Schwerpunkthöhe d kann in eine Überschlagserkennung einfließen, die beispielsweise neben der Schwerpunkthöhe auch die Masse des Fahrzeugs sowie eine gegebenenfalls auftretende Fahrt auf geneigter Fahrbahn berücksichtigt. Auch kann der so ermittelte Fahrzeugschwerpunkt zur Erfassung anderer Zustandsparameter beispielsweise der Fahrbahnneigung zuverlässig eingesetzt werden.

Somit kann eine Kombination aus Masseschätzung, daran anschließender Schwerpunkthöhenschätzung und ein nachgeschalteter Fahrbahnneigungsdetektion zuverlässige Werte für eine Überschlagserkennung bereitstellen.

**Patentansprüche**

1. Verfahren zur Schwerpunkthöhenschätzung eines Fahrzeugs (1), das die Schritte umfasst:

- Ermitteln einer Querbeschleunigung (ay) des Fahrzeugs (1),
- Detektion einer vorgegebenen ersten Fahrsituation (Z1, Z2) zu einem ersten Zeitpunkt (t1) in Abhängigkeit einer ermittelten Rollrate (r) oder eines ermittelten Rollwinkels ($\varphi$) des Fahrzeugs (1),
- Detektion einer vorgegebenen zweiten Fahrsituation (Z2, Z3) zu einem zweiten Zeitpunkt (t2) in Abhängigkeit der ermittelten Rollrate (r) oder des ermittelten Rollwinkels ($\varphi$) des Fahrzeugs (1), wobei bei der Detektion der ersten Fahrsituation (Z1) und der zweiten Fahrsituation (Z2) jeweils erfasst wird, ob der Rollwinkel ($\varphi$) ein lokales Extremum erreicht,
- Ermitteln eines Differenzwinkels ($\Delta\varphi$), um den ein Fahrzeugaufbau (12) des Fahrzeugs (1) in einem Zeitraum verkippt, wobei der Zeitraum vom ersten und zweiten Zeitpunkt (t1, t2) begrenzt wird,
- Ermitteln einer Winkelgeschwindigkeit ($\Delta\dot{\varphi}$) der Verkippung im Zeitraum,
- Ermitteln einer Winkelbeschleunigung ($\Delta\ddot{\varphi}$) der Verkippung im Zeitraum, und
- Schätzen einer Schwerpunkthöhe (d) des Fahrzeugs (1) basierend auf einer Bewegungsgleichung in Abhängigkeit der Querbeschleunigung (ay), des Differenzwinkels ($\Delta\varphi$), der Winkelgeschwindigkeit ($\Delta\dot{\varphi}$) und der Winkelbeschleunigung ($\Delta\ddot{\varphi}$).

2. Verfahren nach Anspruch 1, **dadurch gekennzeichnet, dass** bei der Detektion der ersten Fahrsituation (Z1, Z2) erfasst wird, ob die Rollrate (r) eine vorgegebene erste Schwelle (S1) überschreitet oder unterschreitet, und dass bei der Detektion der zweiten Fahrsituation (Z2, Z3) erfasst wird, ob die Rollrate (r) eine vorgegebene zweite Schwelle (S2) unterschreitet oder überschreitet.

3. Verfahren nach Anspruch 1 oder 2, **dadurch gekennzeichnet, dass** bei der Detektion der ersten Fahrsituation (Z1, Z2) und der zweiten Fahrsituation (Z2, Z3) erfasst wird, ob die Rollrate (r) verschwindet oder verschwindet.

4. Verfahren nach einem der Ansprüche 1 bis 3, **dadurch gekennzeichnet, dass** der Differenzwinkel ($\Delta\varphi$) durch eine Integration der Rollrate (r) im Zeitraum erfasst wird.

5. Verfahren nach einem der Ansprüche 1 bis 4, **dadurch gekennzeichnet, dass** die Winkelbeschleunigung ($\Delta\ddot{\varphi}$) durch eine Ableitung der Rollrate (r) im Zeitraum erfasst wird.

6. Verfahren nach einem der Ansprüche 1 bis 5, **dadurch gekennzeichnet, dass** in Abhängigkeit von einer erfassten Betriebsgröße erfasst wird, ob das Fahrzeug (1) auf einer quer geneigten Fahrbahn (2) fährt, und die Schwerpunkthöhenschätzung nur erfolgt, wenn die Neigung der Fahrbahn (2) einen vorgegebenen Winkel nicht überschreitet.

7. Verfahren nach einem der Ansprüche 1 bis 6, **da-**

**durch gekennzeichnet, dass** in Abhängigkeit einer erfassten Betriebs größe (ay) detektiert wird, ob das Fahrzeug (1) eine quasistationäre Kreisfahrt durchführt, und die Schwerpunkthöhenschätzung nur erfolgt, wenn keine quasistationäre Kreisfahrt detektiert wird.

8. Verfahren nach Anspruch 7, **dadurch gekennzeichnet, dass** die Erfassung der quasistationären Kreisfahrt umfasst, die Differenz eines erfassten ersten Beschleunigungssignals (s_ay), das zumindest eine Beschleunigungskomponente senkrecht zu einer Fahrzeughochachse (z) anzeigt, und eines zweiten Beschleunigungssignals (s_ayd), das das gefilterte erste Beschleunigungssignal (a_ay) umfasst, dahin gehend mit einem vorgegebenen Grenzwert (G) zu vergleichen, ob der Betrag der Differenz kleiner als der vorgegebene Grenzwert (G) ist.

9. Verfahren nach Anspruch 8, **dadurch gekennzeichnet, dass** die Filterung eine Chebyshev-Filterung (f) umfasst.

10. Verfahren nach Anspruch 8 oder 9, **dadurch gekennzeichnet, dass** der Vergleich mehrfach, jeweils zeitversetzt durchgeführt wird, und ein Zähler (n) in Abhängigkeit des durchgeführten Vergleichs gesetzt wird.

11. Verfahren nach Anspruch 10, **dadurch gekennzeichnet, dass** zur Detektion der quasistationären Kreisfahrt verglichen wird, ob der Zähler (n) einen vorgegebenen Grenzwert (P/2) überschreitet.

12. Verfahren nach einem der Ansprüche 8 bis 11, **dadurch gekennzeichnet, dass** die Beschleunigungskomponente die erfasste Querbeschleunigung (ay) ist.

13. Verfahren nach Anspruch 12, **dadurch gekennzeichnet, dass** eine weitere Beschleunigungskomponente zur Detektion der quasistationären Kreisfahrt erfasst wird, die eine erfasste Längsbeschleunigung des Fahrzeugs (1) ist.

14. Verfahren nach einem der Ansprüche 1 bis 13, **dadurch gekennzeichnet, dass** eine Masse (m) des Fahrzeugs (1) in Abhängigkeit von einer erfassten Betriebsgröße geschätzt wird, wobei die Masse (m) in die Bewegungsgleichung eingeht.

15. Verfahren nach einem der Ansprüche 1 bis 14, **dadurch gekennzeichnet, dass** Abstandsveränderungen des Fahrzeugaufbaus (12) relativ zu Radaufhängungen eines Fahrwerks (11) des Fahrzeugs (1) ermittelt werden, und anhand hand der Abstandsveränderungen die Rollrate (r) ermittelt wird.

16. Verfahren nach einem der Ansprüche 1 bis 15, **dadurch gekennzeichnet, dass** die geschätzte Schwerpunkthöhe (h) zu einer Überschlagsdetektion verwendet wird.

17. Vorrichtung zur Schwerpunkthöhenschätzung eines Fahrzeugs (1) umfassend:

- einen Sensor (22), der ausgebildet ist, eine Querbeschleunigung (ay) des Fahrzeugs (1) zu ermitteln,
- einen Detektor (25, 26), der ausgebildet ist, eine vorgegebene erste Fahrsituation (S1, S2) zu einem ersten Zeitpunkt (t1) in Abhängigkeit einer ermittelten Rollrate (r) oder eines ermittelten Rollwinkels (φ) des Fahrzeugs (1) zu detektieren, und eine vorgegebene zweite Fahrsituation (S2, S3) zu einem zweiten Zeitpunkt (t2) in Abhängigkeit der ermittelten Rollrate (r) oder des ermittelten Rollwinkels (φ) des Fahrzeugs (1) zu detektieren, jeweils unter Erfassung eines möglichen lokalen Extremum des Rollwinkels (φ),
- eine Rollwinkeleinheit (28), die ausgebildet ist, einen Differenzwinkel ($\Delta\varphi$), um den ein Fahrzeugaufbau (12) des Fahrzeugs (1) in einem Zeitraum verkippt, zu ermitteln, wobei der Zeitraum vom ersten und zweiten Zeitpunkt (t1, t2) begrenzt wird,
- eine Rollrateneinheit (27), die ausgebildet ist, eine Winkelgeschwindigkeit ($\Delta\dot{\varphi}$) der Verkippung im Zeitraum zu ermitteln,
- eine Rollbeschleunigungseinheit (29), die ausgebildet ist, eine Winkelbeschleunigung ($\Delta\ddot{\varphi}$) der Verkippung im Zeitraum zu ermitteln, und
- eine Schätzeinheit, die ausgebildet ist, eine Schwerpunkthöhe (d) des Fahrzeugs (1) basierend auf einer Bewegungsgleichung in Abhängigkeit der Querbeschleunigung (ay), des Differenzwinkels ($\Delta\varphi$), der Winkelgeschwindigkeit ($\Delta\dot{\varphi}$) und der Winkelbeschleunigung ($\Delta\ddot{\varphi}$) zu schätzen.

**Claims**

1. Method for estimating the height of the centre of gravity of a vehicle (1), which comprises the steps:

- Determining a lateral acceleration (ay) of the vehicle (1),
- Detecting a predefined first driving situation (Z1, Z2) at a first point in time (t1) as a function of a determined roll rate (r) or of a determined roll angle (φ) of the vehicle (1),
- Detecting a predefined second driving situation (Z2, Z3) at a second point in time (t2) as a function of the determined roll rate (r) or of the de-

termined roll angle ($\varphi$) of the vehicle (1) whereby, during the detection of the first driving situation (Z1) and the second driving situation (Z2) it is recorded in each case whether the roll angle ($\varphi$) reaches a local extreme value,
- Determining a differential angle ($\Delta\varphi$) by which a vehicle body (12) of the vehicle (1) tilts during a period of time, with the period of time being delimited by the first and the second point in time (t1, t2),
- Determining an angular speed ($\Delta\dot{\varphi}$) of the tilting in a period of time,
- Determining an angular acceleration ($\Delta\ddot{\varphi}$) of the tilting in a period of time, and
- Estimating the height of a centre of gravity (d) of the vehicle (1) based on an equation of motion as a function of the lateral acceleration (ay), of the differential angle ($\Delta\varphi$), of the angular speed ($\Delta\dot{\varphi}$) and of the angular acceleration ($\Delta\ddot{\varphi}$).

2. Method according to claim 1, **characterised in that**, on detection of the first driving situation (Z1, Z2), it is recorded whether or not the roll rate (r) exceeds or falls below a predefined first threshold (S1) and that, on detection of the second driving situation (Z2, Z3), it is recorded whether or not the roll rate (r) exceeds or falls below a predefined second threshold (S2).

3. Method according to claim 1 or 2, **characterised in that**, on detection of the first driving situation (Z1, Z2) and the second driving situation (Z2, Z3) it is recorded whether or not the roll rate (r) disappears or almost disappears.

4. Method according to one of the claims 1 to 3, **characterised in that** the differential angle ($\Delta\varphi$) is recorded by integrating the roll rate (r) in the period of time.

5. Method according to one of the claims 1 to 4, **characterised in that** the angular acceleration ($\Delta\ddot{\varphi}$) is recorded by deriving the roll rate (r) in the period of time.

6. Method according to one of the claims 1 to 5, **characterised in that** it is recorded as a function of a recorded operating value whether or not the vehicle (1) is traveling on a sloped driving surface (2), and estimating the height of the centre of gravity is only carried out when the slope of the driving surface (2) does not exceed a predefined angle.

7. Method according to one of the claims 1 to 6, **characterised in that** it is detected as a function of a recorded operating value (ay) whether or not the vehicle (1) is carrying out a quasi-stationary circular trip, and estimating the height of the centre of gravity is only carried out when no quasi-stationary circular trip is detected.

8. Method according to claim 7, **characterised in that** recording the quasi-stationary circular trip comprises comparing the difference between a recorded first acceleration signal (s_ay), which exhibits at least one acceleration component vertical to a vertical axis (z) of the vehicle and a second acceleration signal (s_ayd) that comprises the filtered first acceleration signal (a_ay) with a predefined limit value (G) to determine whether or not the amount of the difference is below the predefined limit value (G).

9. Method according to claim 8, **characterised in that** the filtering comprises Chebyshev filtering (f).

10. Method according to claim 8 or 9, **characterised in that** the comparison in each case takes place repeatedly at intervals and a counter (n) is set as a function of the comparison that has been made.

11. Method according to claim 10, **characterised in that**, in order to detect the quasi-stationary circular trip, a comparison is made to determine whether or not the counter (n) exceeds a predefined limit value (P/2).

12. Method according to one of the claims 8 to 11, **characterised in that** the acceleration component is the recorded lateral acceleration (ay).

13. Method according to claim 12, **characterised in that** a further acceleration component is recorded in order to detect the quasi-stationary circular trip, which is a recorded longitudinal acceleration of the vehicle (1).

14. Method according to one of the claims 1 to 13, **characterized in that** a mass (m) of the vehicle (1) is estimated as a function of a recorded operating value, with the mass (m) being included in the equation of motion.

15. Method according to one of the claims 1 to 14, **characterized in that** changes in the vehicle body (12) are determined over distance relative to the wheel suspensions of a chassis (11) of the vehicle (1) and the roll rate (r) is determined by means of changes over distance.

16. Method according to one of the claims 1 to 15, **characterized in that** the estimated height of the centre of gravity (h) is used for a rollover identification.

17. A device for estimating the height of the centre of gravity of a vehicle (1) comprising:

- a sensor (22), which is embodied to determine a lateral acceleration (ay) of the vehicle (1),
- a detector (25, 26), which is embodied to detect a predefined first driving situation (S1, S2) at a first point in time (t1) as a function of a determined roll rate (r) or of a determined roll angle (φ) of the vehicle (1) and to detect a predefined second driving situation (S2, S3) at a second point in time (t2) as a function of the determined roll rate (r) or of the determined roll angle (φ) of the vehicle (1), while recording a possible local extreme value of the roll angle (φ),
- a roll angle unit (28), which is embodied to determine a differential angle (Δφ) by which a vehicle body (12) of the vehicle (1) tilts in a period of time, with the period of time being delimited by the first and the second point in time (t1, t2),
- a roll rate unit (27), which is embodied to determine an angular speed ($\Delta\dot{\varphi}$) of the tilting in the period of time,
- a roll acceleration unit (29), which is embodied to determine an angular acceleration ($\Delta\ddot{\varphi}$) of the tilting in the period of time, and
- an estimation unit, which is embodied to estimate the height of the centre of gravity (d) of the vehicle (1) on the basis of an equation of motion as a function of the lateral acceleration (ay), of the differential angle (Δφ), of the angular speed ($\Delta\dot{\varphi}$) and of the angular acceleration ($\Delta\ddot{\varphi}$).

## Revendications

1. Procédé d'estimation de la hauteur du centre de gravité d'un véhicule (1), qui comprend les étapes consistant à :

   - déterminer une accélération transversale (ay) du véhicule (1),
   - détecter une première situation de conduite prédéfinie (Z1 Z2) à un premier moment (t1) en fonction d'un taux de roulis déterminé (r) ou d'un angle de roulis déterminé (φ) du véhicule (1),
   - détecter une seconde situation de conduite prédéfinie (Z2, Z3) à un second moment (t2) en fonction du taux de roulis déterminé (r) ou de l'angle de roulis déterminé (φ) du véhicule (1), dans lequel, lors de chacune des détections de la première situation de conduite (Z1) et de la seconde situation de conduite (Z2), on constate si l'angle de roulis (φ) atteint une valeur extrême locale,
   - déterminer un angle de différence (Δφ), autour duquel une structure (12) du véhicule (1) oscille pendant une période de temps, la période de temps étant limitée par les premier et second moments (t1, t2),
   - déterminer une vitesse angulaire ($\Delta\dot{\varphi}$) de l'oscillation dans la période de temps,
   - déterminer une accélération angulaire ($\Delta\ddot{\varphi}$) de l'oscillation dans la période de temps, et
   - estimer une hauteur (d) du centre de gravité du véhicule (1) sur la base d'une équation de mouvement en fonction de l'accélération transversale (ay), de l'angle de différence (Δφ), de la vitesse angulaire ($\Delta\dot{\varphi}$) et de l'accélération angulaire ($\Delta\ddot{\varphi}$).

2. Procédé selon la revendication 1, **caractérisé en ce que**, lors de la détection de la première situation de conduite (Z1, Z2), on évalue si le taux de roulis (r) dépasse un premier seuil prédéfini (S1) ou se situe en dessous de celui-ci et **en ce que**, lors de la détection de la seconde situation de conduite (Z2, Z3), on évalue si le taux de roulis (r) se situe en dessous ou au-dessus d'un second seuil prédéfini (S2).

3. Procédé selon la revendication 1 ou 2, **caractérisé en ce que**, lors de la détection de la première situation de conduite (Z1 Z2) et de la seconde situation de conduite (Z2, Z3), on constate si le taux de roulis (r) disparaît ou non.

4. Procédé selon l'une quelconque des revendications 1 à 3, **caractérisé en ce que** l'angle de différence (Δφ) est calculé par intégration du taux de roulis (r) dans la période de temps.

5. Procédé selon l'une quelconque des revendications 1 à 4, **caractérisé en ce que** l'accélération angulaire ($\Delta\ddot{\varphi}$) est calculée par une dérivation du taux de roulis (r) dans la période de temps.

6. Procédé selon l'une quelconque des revendications 1 à 5, **caractérisé en ce qu'**en fonction d'une grandeur de fonctionnement calculée, on évalue si le véhicule (1) roule sur une voie (2) inclinée transversalement et l'estimation de la hauteur du centre de gravité ne s'effectue que si l'inclinaison de la voie (2) ne dépasse pas un angle prédéfini.

7. Procédé selon l'une quelconque des revendications 1 à 6, **caractérisé en ce qu'**en fonction d'une grandeur de fonctionnement calculée (ay), on détecte si le véhicule (1) réalise un mouvement giratoire quasi-stationnaire et l'estimation de la hauteur du centre de gravité ne s'effectue que si l'on ne détecte aucun mouvement giratoire quasi-stationnaire.

8. Procédé selon la revendication 7, **caractérisé en ce que** le calcul du mouvement giratoire quasi-stationnaire comprend le calcul de la différence entre un premier signal d'accélération déterminé (s_ay), qui indique au moins une composante d'accélération perpendiculaire à un axe vertical de véhicule (z), et un second signal d'accélération (s_ayd), qui comprend le premier signal d'accélération filtré (a_ay), pour la comparer à une valeur limite (G) prédéfinie de façon à déterminer si le montant de la différence est inférieure à la valeur limite (G) prédéfinie.

9. Procédé selon la revendication 8, **caractérisé en ce que** le filtrage comprend un filtrage de Chebyshev (f).

10. Procédé selon la revendication 8 ou 9, **caractérisé en ce que** la comparaison est réalisée plusieurs fois, à chaque fois de manière décalée dans le temps, et **en ce qu'**un compteur (n) est réglé en fonction de la comparaison réalisée.

11. Procédé selon la revendication 10, **caractérisé en ce que**, pour détecter le mouvement giratoire quasi-stationnaire, on compare si le compteur (n) dépasse une valeur limite (P/2) prédéfinie.

12. Procédé selon l'une quelconque des revendications 8 à 11, **caractérisé en ce que** la composante d'accélération est l'accélération transversale déterminée (ay).

13. Procédé selon la revendication 12, **caractérisé en ce qu'**une autre composante d'accélération est déterminée pour détecter le mouvement giratoire quasi-stationnaire qui est une accélération longitudinale déterminée du véhicule (1).

14. Procédé selon l'une quelconque des revendications 1 à 13, **caractérisé en ce qu'**une masse (m) du véhicule (1) est estimée en fonction d'une grandeur de fonctionnement déterminée, la masse (m) entrant dans l'équation de mouvement.

15. Procédé selon l'une quelconque des revendications 1 à 14, **caractérisé en ce que** l'on détermine des variations d'écart de la structure de véhicule (12) par rapport aux suspensions des roues d'un châssis (11) du véhicule (1) et **en ce que** l'on détermine le taux de roulis (r) à l'aide des variations d'écart.

16. Procédé selon l'une quelconque des revendications 1 à 15, **caractérisé en ce que** la hauteur (h) du centre de gravité estimée est utilisée pour une détection de capotage.

17. Dispositif d'estimation de la hauteur du centre de gravité d'un véhicule (1), comprenant :

- un capteur (22) conçu pour déterminer une accélération transversale (ay) du véhicule (1),
- un détecteur (25, 26) conçu pour détecter une première situation de conduite (S1, S2) prédéfinie à un premier moment (t1) en fonction d'un taux de roulis (r) déterminé ou d'un angle de roulis (φ) déterminé du véhicule (1) et pour détecter une seconde situation de conduite (S2, S3) prédéfinie à un second moment (t2) en fonction du taux de roulis (r) déterminé ou de l'angle de roulis déterminé (φ) du véhicule (1), en calculant à chaque fois une valeur extrême locale possible de l'angle de roulis (φ),
- une unité d'angle de roulis (28) conçue pour déterminer un angle de différence ($\Delta\varphi$), autour duquel une structure (12) du véhicule (1) oscille pendant une période de temps, la période de temps étant limitée par les premier et second moments (t1, t2),
- une unité de taux de roulis (27) conçue pour déterminer une vitesse angulaire ($\Delta\dot{\varphi}$) de l'oscillation dans la période de temps,
- une unité d'accélération de roulis (29) conçue pour déterminer une accélération angulaire ($\Delta\ddot{\varphi}$) de l'oscillation dans la période de temps, et
- une unité d'estimation conçue pour estimer une hauteur (d) du centre de gravité du véhicule (1) sur la base d'une équation de mouvement en fonction de l'accélération transversale (ay), de l'angle de différence ($\Delta\varphi$), de la vitesse angulaire ($\Delta\dot{\varphi}$) et de l'accélération angulaire ($\Delta\ddot{\varphi}$).

EP 2 069 171 B1

FIG 1

FIG 2

FIG 3

21

r

24

22

ay

23

m

r > S1

25

r < S2

26

t1

t2

27

$\Delta\dot\varphi$

$d \cdot m \cdot ay - I \cdot \Delta\ddot\varphi = c1 \cdot \Delta\varphi + c2 \cdot \Delta\dot\varphi$

t1

t2

28

$\int$

$\Delta\varphi$

t1

t2

29

$\dfrac{d}{dt}$

$\Delta\ddot\varphi$

d

30

# FIG 4

```
s_ay ──────▶ ┌──────────┐ ──────▶ s_ayd
             │    f     │
             └──────────┘
```

$$|s\_ayd| < |s\_ay|$$

J ◀─── ┤ │s_ayd│ < │s_ay│ ├ ◀───

N

```
┌──────────┐        ┌──────────┐
│  n=n+1   │        │  n=n-1   │
│ [0<n<P]  │        │ [0<n<P]  │
└──────────┘        └──────────┘
```

$$n > P/2$$

J          N

Qy=1       Qy=0

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19918597 A1
- DE 3222149 C2
- DE 4416991 A1
- DE 10247993 A1
- DE 10135020 A1
- DE 4217710 A1